# EUROPEAN PATENT SPECIFICATION

(11) **EP 4 089 272 B1**
(45) Date of publication and mention of the grant of the patent: **26.03.2025**
(21) Application number: 22172654.0
(22) Date of filing: 10.05.2022
(51) Int. Cl.: F02C 6/08, F01D 17/10, F02K 3/06

(54) **FLUID SYSTEM FOR GAS TURBINE ENGINE**
FLUIDSYSTEM FÜR EINEN GASTURBINENMOTOR
SYSTÈME DE FLUIDE POUR MOTEUR À TURBINE À GAZ

(30) Priority: 13.05.2021 US 202117319240
(43) Date of publication of application: 16.11.2022
(73) Proprietor: PRATT & WHITNEY CANADA CORP., Longueuil, Québec J4G 1A1 (CA)
(72) Inventor: MIRMOHAMMADI GHOOJDI, Tahereh, (01BE5) Longueuil, J4G 1A1 (CA)
(74) Representative: Dehns

(56) References cited:
- US-A1- 2010 126 182
- US-A1- 2017 167 618
- US-A1- 2018 038 279
- US-A1- 2018 057 170
- US-A1- 2020 290 741

## Description

### TECHNICAL FIELD

The invention relates generally to aircraft engines and, more particularly, to pneumatic systems used in such engines.

### BACKGROUND

In an aircraft engine, such as a gas turbine engine for example, there is sometimes a need to draw air from one air duct, for feeding downstream for other uses. Such an air duct may include an annular bypass duct that annularly surrounds a core of a turbofan gas turbine engine, for example. The core includes a compressor section, a combustor, and a turbine section. However, in some cases, the pipe used to draw the air from the bypass duct may induce undesired noises and/or vibrations. Improvements are therefore sought.

US 2020/290741 discloses a gas turbine engine bleed duct.

US 2018/057170 discloses an enhanced method and aircraft for pre-cooling an environmental control system using a two wheel turbo-machine with a supplemental heat exchanger.

US 2017/167618 discloses a check valve.

US 2010/126182 discloses a flush inlet scoop design for an aircraft bleed air system.

US 2018/038279 discloses a bypass duct louver for noise mitigation.

### SUMMARY

According to an aspect of the present invention, there is provided an aircraft engine in accordance with claim 1.

The aircraft engine as defined above and herein may further include, in whole or in part, and in any combination, one or more of the following additional features.

Optionally, and in accordance with the above, the duct includes an annular gaspath defined radially between the inner casing and the outer casing of the aircraft engine.

Optionally, and in accordance with any of the above, the second valve is a non-actuated valve, the non-actuated valve moving from the second closed configuration to the second open configuration following a pressure differential across the second valve greater than a pressure threshold.

Optionally, and in accordance with any of the above, the second valve is located at the bleed port.

Optionally, and in accordance with any of the above, the second valve includes at least one gate movable from a closed position in which the at least one gate blocks fluid communication between the duct and the bleed conduit through the second valve and an open position in which the at least one gate allows fluid communication through the second valve.

Optionally, and in accordance with any of the above, the at least one gate includes a plurality of gates circumferentially distributed about a valve axis.

Optionally, and in accordance with any of the above, each of the plurality of gates is pivotable from a closed position to an open position about a respective one of pivot axes being normal to the valve axis.

Optionally, and in accordance with any of the above, each of the plurality of gates has an edge pivotably connected to a peripheral wall of the bleed conduit or to a peripheral wall circumscribing the bleed port.

Optionally, and in accordance with any of the above, the at least one gate extends into the bleed conduit when the at least one gate is in the open position.

Optionally, and in accordance with any of the above, the plurality of gates are triangular, each of the plurality of gates having side edges sealingly engaged to side edges of adjacent gates of the plurality of gates.

Optionally, and in accordance with any of the above, the plurality of gates are circumferentially distributed around the valve axis, each of the plurality of gates partially overlapping a circumferentially adjacent one of the plurality of gates.

Optionally, and in accordance with any of the above, the at least one gate is biased in the closed position.

Optionally, and in accordance with any of the above, at least one biasing member is operatively connected to the at least one gate, the at least one biasing member exerting a force on the at least one gate to push the at least one gate in the closed position.

Optionally, and in accordance with any of the above, the at least one gate is free from engagement with an actuator.

### BRIEF DESCRIPTION OF THE DRAWINGS

Reference is now made to the accompanying figures in which:
Fig. 1 is a schematic cross sectional view of a gas turbine engine;
Fig. 2 is a schematic three dimensional view of a portion of Fig. 1 illustrating a first valve and a second valve both in a closed configuration;
Fig. 3 is a schematic front view of the second valve of Fig. 2 shown in the closed configuration;
Fig. 4 is a schematic three dimensional view of the first and second valves of Fig. 2 shown in an open configuration;
Fig. 5 is a schematic front view of the second valve of Fig. 4 shown in the open configuration;
Fig. 6 is a schematic front view of a valve in accordance with another embodiment, the valve shown in a closed configuration;
Fig. 7 is a schematic front view of a valve in accordance with yet another embodiment, the valve shown in a closed configuration; and
Fig. 8 is a schematic front view of a valve in accordance with still yet another embodiment, the valve shown in a closed configuration.

### DETAILED DESCRIPTION

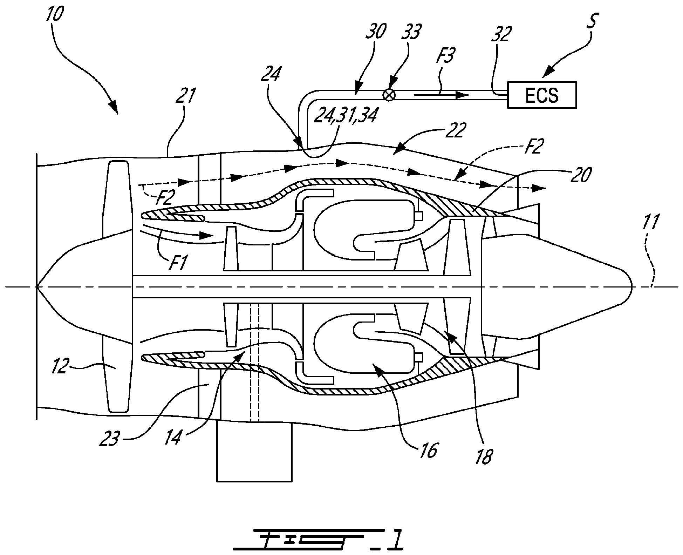

Fig. 1 illustrates an aircraft powerplant (or simply "engine") 10 of a type preferably provided for use in subsonic flight. In this particular embodiment, such a powerplant may include a gas turbine engine that generally comprises in serial flow communication a fan 12 through which ambient air is propelled, a compressor section 14 for pressurizing the air, a combustor 16 in which the compressed air is mixed with fuel and ignited for generating an annular stream of hot combustion gases, and a turbine section 18 for extracting energy from the combustion gases. The fan 12, the compressor section 14, and the turbine section 18 are rotatable about a central axis 11 of the engine 10.

The engine 10 includes an inner casing 20 that extends circumferentially around the compressor section 14, the combustor 16, and the turbine section 18. The engine 10 has an outer casing 21 extending annularly around the inner casing 20. A bypass duct 22 is defined radially relative to the central axis 11 between the inner casing 20 and the outer casing 21. Struts 23 may extend in a direction having a radial component relative to the central axis 11, such as to radially support the outer casing 21 relative to the inner casing 20. The struts 23 may be circumferentially distributed around the central axis 11 and extend across the bypass duct 22.

As shown in Fig. 1, the fan 12 creates an airflow that is divided into a core flow F1 and an annular flow F2; the annular flow F2 extending around the core flow F1. The inner casing 20 has a leading edge that divides the flow exiting the fan 12 into the core flow F1 and the annular flow F2. The annular flow F2 flows in the bypass duct 22 defined between the inner casing 20 and the outer casing 21. The annular flow F2 is re-united with the core flow F1 at an exhaust of the engine 10.

In some cases, it may be desirable to draw fluid (e.g. air) from a first or main passage or duct, which in this case is the bypass duct 22, to supply the withdrawn or bled fluid to different systems S of the engine 10 and/or to supply air to different systems S of an aircraft equipped with the engine 10. For instance, the air drawn from the bypass duct 22 may be used to supply an environmental control system (ECS) of an aircraft with fresh air. In some cases, the air drawn from the bypass duct 22 may be used in a heat exchanger of the aircraft for cooling aircraft components. Therefore, in some cases, the drawing of the air from the bypass duct 22 is driven by requirements of external systems outside of the engine 10.

As shown in Fig. 1, a bleed pipe 30, which may also be referred to as a bleed conduit or bleed duct, is pneumatically connected to the bypass duct 22 and stems from the bypass duct 22 between inlet and outlet of the bypass duct 22. Specifically, the outer casing 21 defines a bleed port 24; the bleed pipe 30 having a bleed inlet 31 pneumatically connected to the bleed port 24. The bleed pipe 30 has a bleed outlet 32 pneumatically connected to the system S, which may be the ECS or any other suitable system(s) S in need of fresh air.

A first valve 33, also referred to as a master valve, is pneumatically connected to the bleed pipe 30 between the bleed inlet 31 and the bleed outlet 32. The first valve 33 has a first open configuration in which the bleed inlet 31 is pneumatically connected to the bleed outlet 32 through the first valve 33 and a first closed configuration in which the bleed inlet 31 is disconnected from the bleed outlet 32 by the first valve 33. The first valve 33 may be a butterfly valve or any other types of valve having regulating functions. The first valve 33 may be operable to regulate an air flow flowing in to the bleed pipe 30 as a function of flight conditions and/or as a function of air requirements of the system(s) S. In other words, the first valve 33 may have at least one intermediate configuration or position between the open configuration and the closed configuration. At given conditions (e.g., speed, altitude, etc.), a mass flow rate of the air flowing in the bleed pipe 30 is greater when the first valve 33 is at the open configuration than a mass flow rate into the bleed pipe 30 when the first valve 33 is at any of the at least one intermediate configuration.

It has been observed that, in some operating conditions, the bleed pipe 30 may exhibit tonal noise when the first valve 33 is in the first closed configuration. This tonal noise may be an indicator of acoustic instability in the bleed pipe 30, which may damage some components of the engine 10. This tonal noise may also result in cabin or external noises, which may be unpleasant for passengers. This tonal noise may be the result of a resonating closed-ended cavity defined by the bleed pipe 30 from the bleed inlet 31 or bleed port 24 to the first valve 33; this closed-ended cavity may resonate as a result of air flowing into the bypass duct 22 passed the bleed port 24. Specifically, flow instabilities may be created when the annular flow F2 flows past the bleed port 24.

In the embodiment shown, a second valve 34, which may be referred to as a slave valve, is located upstream of the first valve 33 relative to a bleed flow F3 flowing into the bleed pipe 30. This second valve 34 may therefore decrease a volume of this closed-ended cavity and may prevent the noise phenomenon described above. This second valve 34 may sit flush with the bleed port 24. The second valve 34 is located at or proximate the port 24. In some cases not forming part of the invention, this second valve 34 may be located downstream of the port 24 into the bleed pipe 30. In some other cases not forming part of the invention, second valve 34 may be located anywhere inside the bleed pipe 30. In some embodiments, the second valve 34 is located at the bleed inlet 31 since this may avoid creating any cavities in the bypass duct 22. However, this may not be possible in some embodiments due to the design of bleed pipe entrance. In such cases, the second valve 34 may be placed further downstream of the bleed port 24. In some examples not forming part of the invention, second valve 34 may be located anywhere upstream of the first valve 33 such that it may change the frequency of tone/resonance inside the bleed pipe 30.

In some embodiments, for instance, when the bleed pipe 30 is used to provide air to a system S of an aircraft, the control/actuation of the first valve 33 may be controlled by a controller of the aircraft. In other words, a controller of the engine 10 may have no control over actuation of the first valve 33. In the embodiment shown, the second valve 34 has a second open configuration and a second closed configuration. In the second open configuration, the bleed inlet 31 is pneumatically connected to the bleed outlet 32 through the second valve 34 and through the first valve 33. In the second closed configuration, the bleed inlet 31 is pneumatically disconnected from the first valve 33 by the second valve 34. The second valve 34, in the second closed configuration, fluidly isolates a portion of the bleed pipe 30 from the bypass duct 22; the portion of the bleed pipe 30 located between the first valve 33 and the second valve 34. The second valve 34 is in the second closed configuration when the first valve 33 is in the first closed configuration. The second valve 34 is in the second open configuration when the first valve 33 is in the first open configuration. In other words, switching the first valve 33 from the first closed configuration to the first open configuration indirectly switches the second valve 34 from the second closed configuration to the second open configuration. Hence, controlling the first valve 33 may indirectly control the second valve 34.

This indirect opening of the second valve 34 may be triggered by air being drawn by the system S from the bypass duct F2 thereby causing a pressure drop across the second valve 34. This pressure drop may exert a pressure on the second valve 34 to push a valve body of the second valve 34 out of the flow path to allow air to flow through the second valve 34. In some cases, the first valve 33 and the second valve 34 may be operatively connected to one another such that, sending a signal to the first valve 33 using, for instance, an aircraft controller sends a signal to the second valve 34 to open the second valve at the same time than the first valve 33. In some cases, the aircraft controller is operatively connected to both of the first and second valves 33, 34 to control them independently. In some other cases, the first valve 33 may be operatively connected to the aircraft controller and the second valve 34 may be operatively connected to an engine controller; the aircraft and engine controllers may be operatively connected to one another such that, when a signal is sent by the aircraft controller to open the first valve 33, a signal is sent to the engine controller by the aircraft controller, and the engine controller sends a signal to the second valve 34.

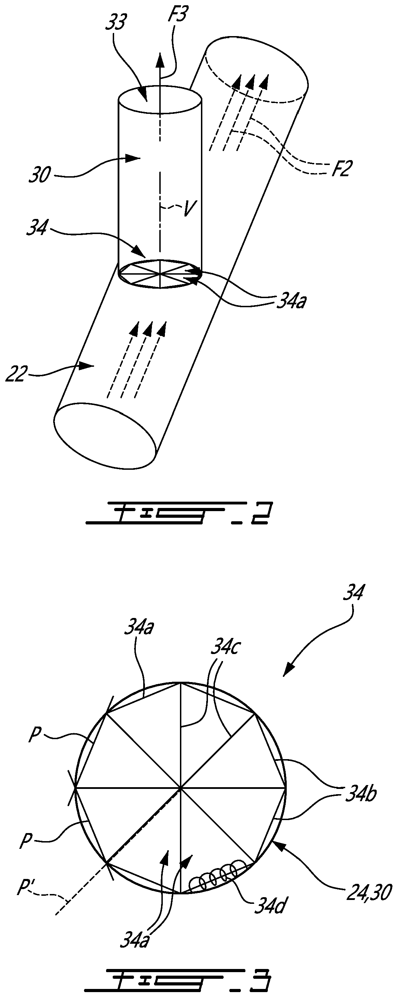

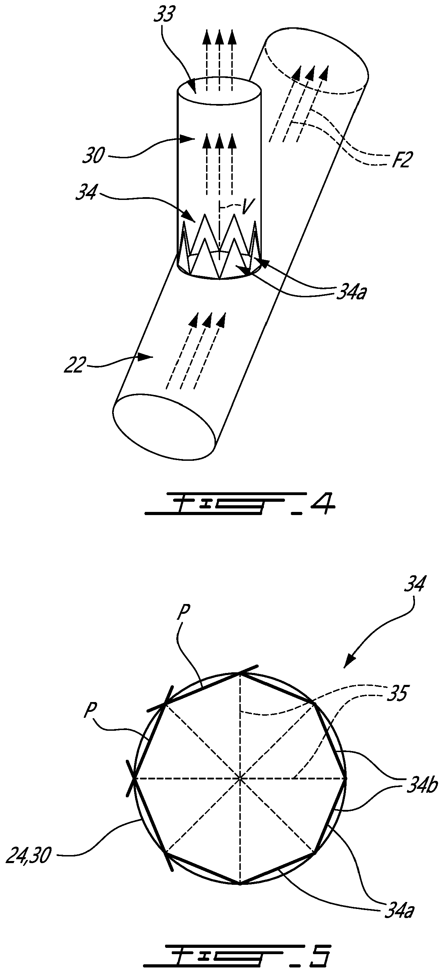

Referring now to Figs. 2-5, the second valve 34 is described in more detail. The second valve 34 is shown in the second closed configuration in Figs. 2-3 and in the second open configuration in Figs. 4-5. In the embodiment shown, the second valve 34 may be a passive, or non-actuated, valve that is switched from its second closed configuration to its second open configuration as a result of a pressure differential between the bleed inlet 31 and the bleed outlet 32 greater than a given pressure threshold. This pressure differential may be imparted by the switching of the first valve 33 from its first closed configuration to its first open configuration. Namely, opening the first valve 33 connects the bleed pipe 30 to a system S in need of fresh air. A pressure in this system S may be lower than a pressure in the bypass duct 22, either as a result of operating conditions and/or because this system S uses a pump to draw air. Consequently, the pressure differential which is thereby created may suction air from the bypass duct 22 via the bleed port 24. The second valve 34 may therefore move from its second closed configuration to its second open configuration as a result of a pressure imbalance created on opposite upstream and downstream sides of the second valve 34. Hence, actuation of the second valve 34 may be triggered by engine flow conditions and may not require external power.

The expression "passive" or "non-actuated" refers to a valve that is not coupled to an actuator for its moving between open and closed configurations. In other words, a passive or non-actuated valve cannot be directly controlled by an actuator. A passive or non-actuated valve may be free from connection to a controller and may be free from engagement with an actuator. The second valves disclosed herein include at least one gate; the at least one gate may be free from engagement with an actuator.

As shown in Figs. 2-3, the second valve 34 includes a plurality of gates 34a that are circumferentially distributed about a valve central axis V. Eight gates 34a are provided in the embodiment shown. It is however understood that only one gate may be used. In some cases, from two to eight gates or more than eight gates may be used without departing from the scope of the present disclosure.

In the embodiment shown, each of the gates 34a is triangular and has having a first edge 34b secured to a wall of the bleed pipe 30 and to a wall circumscribing the bleed port 24 of the outer casing 21. The first edge 34b of each of the gates 34a defines a pivot axis P about which the gates 34a may pivot from a closed position shown in Fig. 3 to an open position shown in Fig. 5. It will be appreciated that any other suitable shapes of the gates may be sued without departing from the scope of the present disclosure. Each of the gates 34a has opposed side edges 34c. In the closed position shown in Fig. 3, the side edges 34c of the gates 34a are in abutment against neighbouring side edges 34c of adjacent gates 34a. A sealing engagement may be defined between the side edges 34c. In some cases, a seal may be disposed on the side edges 34c to provide this sealing engagement.

In an alternate embodiments, the gates may pivot about axes that are substantially radial relative to the valve axis V. In other words, each of the gates may pivot about one of its opposed side edges 34c. Alternate positions of the pivot axes are shown at P' in Fig. 3.

In the embodiment shown, each of the gates 34a is engaged by a biasing member 34d (only one shown for clarity) disposed between the first edges 34b of the gates 34a and the wall of the bleed pipe 30 or the wall of the bleed port 24. The biasing members 34d are operable to bias the gates 34a in their closed position shown in Figs. 2-3. The biasing members 34d may be torsional spring, a compression spring, an extension spring, or any other suitable means operable to exert a force maintaining the gates 34a in their closed position. In some embodiments, constant force/torque springs may be used to bias the gates 34a in their closed position. Any types of actuators such as hydraulic, pneumatic, electric, magnetic, electromechanical, electrohydraulic, electrostatic, electromagnetic, thermal expansion, piezoelectric actuators or a combination of above may be used. In some embodiments, the biasing members 34d are omitted since a weight of the gates 34a may be sufficient to maintain them in their closed position. A center of gravity of each of the gates 34a may remain offset from the pivot axis P when the gates 34a are in their open position such that the gates 34a may revert back to their closed position as a result of their own weight when the first valve 33 is closed. In some cases, back pressure accumulated inside the bleed pipe 30 may help keeping the gates 34a in their closed position. The gates 34a may be designed to cover the entire cross-section of the bleed pipe 30 to block-off the flow when the first valve 33 is closed. The gates 34a may be designed to have non-uniform weight along their surfaces to facilitate the movement between the open and closed positions.

The hinges about which the gates 34a pivot may allow solely rotation of the gates 34a toward the bleed pipe 30 and may prevent rotation of the gates 34a toward the bypass duct 22 such that the second valve 34 acts as a one way valve preventing air from exiting the bleed pipe 30 toward the bypass duct 22. The gates 34a may interlock one another at their side edges 34c to prevent this rotation of the gates 34a toward the bypass duct 22.

In some embodiments, preventing gates to rotate backwards, that is, inside the bypass duct 22, may be achieved by using support rods/frames 35 (Fig. 3) along the side edges 34c of the gates 34a, such that the gates 34a abut on the frames and are prevented from moving backward. This may provide structural stability for the gates 34a as well. A support structure may extend across the bleed pipe 30 for supporting the gates in their closed position.

As shown in Figs. 4-5, when the first valve 33 is switched from its first closed configuration to its first open configuration, the bleed flow F3 is allowed to flow through the first valve 33. The first valve 33 being in its first open configuration results in air being drawn from the bleed pipe 30 and results in a pressure in the bleed pipe 30 being less than that in the bypass duct 22. As pressure wants to equilibrate, a pressure on a first side of the gates 34a that faces the bypass duct 22 becomes greater than a pressure on a second side of the gates 34a that faces the bleed pipe 30 thereby pushing the gates 34a from their closed position of Figs. 2-3 to their open position of Figs. 4-5 to pneumatically connect the portion of the bleed pipe 30 that extends from the second valve 34 to the first valve 33 to the system S in need of air.

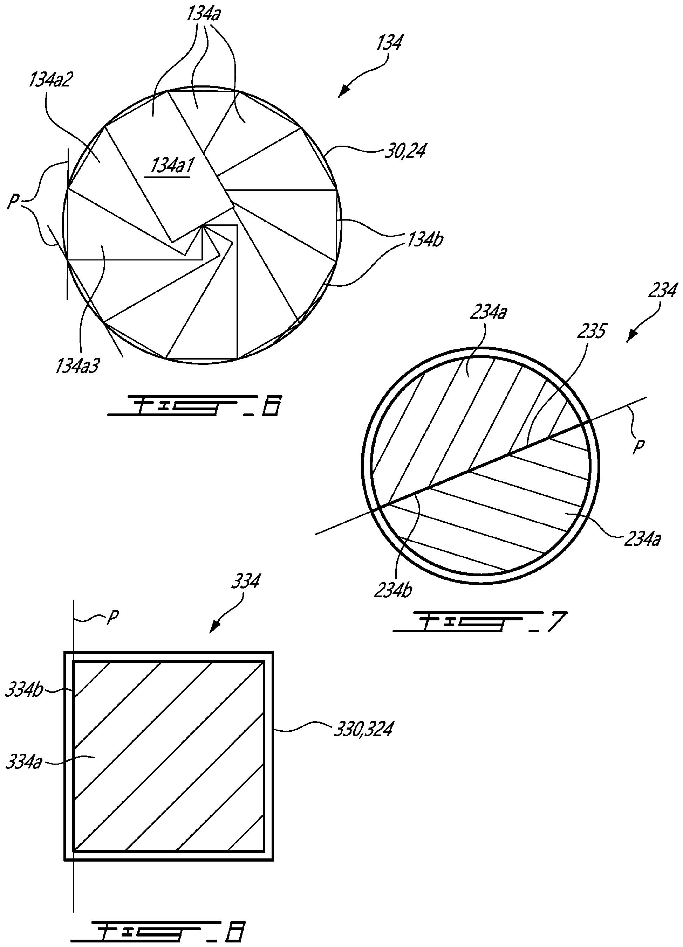

Referring now to Fig. 6, another exemplary second valve is shown at 134. The second valve 134 includes a plurality of gates 134a that are rectangular-shaped. The gates 134a include twelve gates, but as low as two or three gates may be used. The gates 134a are distributed around the valve axis V. Each of the gates 134a has a first edge 134b pivotably mounted to the wall of the bleed pipe 30 or the wall of the bleed port 24. The gates 134a are pivotable about respective pivot axes P defined between the first edges 134b and the wall of the bleed pipe 30 or the wall of the bleed port 24. Each of the gates 134a may extend substantially perpendicularly from the wall of the bleed port 24 or the wall of the bleed pipe 30 across the bleed pipe 30. Stated differently, each of the gates 134a may extend along an axis intersecting the valve axis V. Alternatively, the gates 134a may be angled such that each of the gates 134a extend along an axis free of intersection with the valve axis V.

In the embodiment shown, each of the gates 134a partially overlaps a circumferentially adjacent one of the gates 134a. For instance, a first gate 134a1 of the gates 134a partially overlaps a second gate 134a2 of the gates 134a; the second gate 134a2 being immediately circumferentially adjacent the first gate 134a1 of the gates 134a. Then, the second gate 134a2 partially overlaps a third gate 134a3 of the gate 134a; the third gate 134a3 being immediately circumferentially adjacent the second gate 134a2 of the gates 134a. This goes on and on until a last one of the gates 134a. Consequently, because of the overlapping of the circumferentially adjacent gates 134a, a sealing engagement may be provided by the contacting surfaces of the circumferentially adjacent gates 134a. Each of the gates 134a, but the first gate 134a1 and the last one of the gates 134a, is partially sandwiched between two neighbouring gates 134a.

The hinges about which the gates 134a pivot may allow solely rotation of the gates 134a toward the bleed pipe 30 and may prevent rotation of the gates 134a toward the bypass duct 22 such that the second valve 134 acts as a one way valve preventing air from exiting the bleed pipe 30 toward the bypass duct 22.

Referring now to Fig. 7, another exemplary second valve is shown at 234. The second valve 234 includes two gates 234a pivotably mounted to a central rib 235 extending across the bleed pipe 30 or the bleed port 24. The central rib 235 may intersect the valve axis V. The two gates 234a may be hingedly connected to each other at their central edges 234b and supported by the central rib 235. The central rib 235 need not extend all the way across the bleed pipe 30 or bleed port 24 and may include only two rib members secured to the wall of the bleed pipe 30 or the wall of the bleed port 24 at diametrically opposed locations across the pipe 30 or port 24. In some cases, the pivot axis P may be off-centered.

When the first valve 33 is switched to the open configuration, the pressure difference causes the two gates 234a to rotate about the pivot axis P, which, in this embodiment, extends across the port 24 or pipe 30 and intersects the valve axis V. The two gates 234a therefore rotate toward one another until they become substantially parallel to the valve axis V and substantially parallel to the bleed flow F3 flowing inside the bleed pipe 30. Once the first valve 33 is switched to its closed configuration, the two gates 234a may fall back toward their closed position shown in Fig. 7, either by the result of their own weight or by a biasing member connected to the two gates 234a.

The hinge(s) about which the gates 234a pivot may allow solely rotation of the gates 234a toward the bleed pipe 30 and may prevent rotation of the gates 234a toward the bypass duct 22 such that the second valve 234 acts as a one way valve preventing air from exiting the bleed pipe 30 toward the bypass duct 22. A cleat or shoulder may be defined by the bleed port 24 or bleed pipe 30 for abutment with the gates 234a to prevent them from moving into the bypass duct 22.

Referring now to Fig. 8, another exemplary second valve is shown at 334. In the embodiment shown, the bleed pipe 330 and the bleed port 324 have rectangular or square cross-sections. The second valve 334 includes single gate 334a pivotably mounted via one of its edges 334b to a wall of the bleed pipe 330 or a wall of the bleed port 324. The single gate 334a is therefore rotatable between its closed in open positions about a pivot axis P that, in the present embodiment, registers with the one of the edges 334b of the single gate 334a. It will be appreciated that the pivot axis P may be offset from the edges 334b of the single gate 334a; the pivot axis P being off-centered relative to the single gate 334a such as to allow the pressure differential to create a moment about the pivot axis P to rotate the single gate 334a between the closed and opened positions.

The hinge about which the single gate 334a pivots may allow solely rotation of the gate 334a toward the bleed pipe 30 and may prevent rotation of the gate 334a toward the bypass duct 22 such that the second valve 334 acts as a one way valve preventing air from exiting the bleed pipe 30 toward the bypass duct 22. A cleat or shoulder may be defined by the bleed port 24 or bleed pipe 30 for abutment with the gate 334a to prevent them from moving into the bypass duct 22.

The disclosed second valves 34, 134, 234, 334 may allow to attenuate the noise phenomenon described above by closing the bleed pipe 30 proximate to the bleed port 24 when the first valve 33 is in the closed configuration. The second valves 34, 134, 234, 334, and their respective gates, may rotate to close/block the bleed pipe 30 and stop the flow from the bypass duct 22 from entering the bleed pipe 30. The second valves 34, 134, 234, 334 may allow air to enter the bleed pipe 30 when the first valve 33 is in the open configuration. Their respective gates may rotate in the open position to allow air to pass through the second valves 34, 134, 234, 334. The second valves 34, 134, 234, 334 may disconnect the portion of the bleed pipe 30, 330 that extends from the bleed port 24, 324 to the first valve 33. This may prevent or at least partially alleviate the acoustic tone/noise phenomenon described above. The second valves 34, 134, 234, 334 may act as check valve or one-way valve since air may flow through them solely from the bleed inlet 31 to the bleed outlet 32. Hence, when the first valve 33 is closed, a pressure difference between the bleed pipe 30 and the bypass duct 22 may not force the second valves to open. Means may be provided to preclude the gates 34a, 134a, 234a, 334a from pivoting toward the bypass duct 22. These means may include, for instance, cleats, locking members and so on.

In some embodiments, the second valve may be an actuated valve. That is, either the gate(s) of the second valve are engaged by an actuator operable to move the gate(s) between the closed and open position. Or, the second valve may be servo valve having a servo mechanism engaged to a valve body of the valve to move the valve between open and closed positions. In some embodiments, a hydraulic, pneumatic, and/or electromagnetic mechanism may be engaged to the gate(s) to control rotation/movement of the gate(s). In some cases, the gate(s) may be curved to better conform with a shape of the bleed pipe 30 when the gate(s) is/are in the open position.

In the embodiments shown, the second valve 34, 134, 234, 334 may be switched between their open and closed configurations without requiring external power and without being engaged by an actuator. The second valve 34, 134, 234, 334 may be opened by the flow conditions inside the bleed pipe 30, 330. The second valve 34, 134, 234, 334 may be closed by an external mechanisms, such as springs, pneumatics or electromagnetics (e.g., electromagnetic actuators, solenoids), or may be closed as a result of weight of their respective gates. Both the actuation and de-actuation motions of the second valve could be triggered by external mechanisms, which in-turn could be controlled by aircraft or engine control system via direct or remote protocols. The movement of the gate may be along the flow or at a specified direction to the flow.

In some embodiments, the second valve 34 as disclosed herein may allow to reduce and, in some cases, eliminate the noise associated to the pipe resonance. The second valve 34 may further allow to reduce vibrations and reduce structural instabilities.

The embodiments described in this document provide non-limiting examples of possible implementations of the present technology. Upon review of the present disclosure, a person of ordinary skill in the art will recognize that changes may be made to the embodiments described. For example, although the present disclosure pertains to noise mitigation in turbofan fan air bleed pipe, the concepts described herein may be applicable to any gas turbine engine such as turboshaft or turboprop. The scope of the present invention is defined by the appended set of claims.

## Claims

1. An aircraft engine (10), comprising:
an inner casing (20) extending circumferentially around a compressor section (14), a combustor (16), and a turbine section (18);
an outer casing (21) extending annularly around the inner casing (20);
a duct (22) defined radially relative to a central axis (11) between the inner casing (20) and the outer casing (21), the duct (22) having an inlet and an outlet, the duct (22) defining a bleed port (24) through the outer casing (21) between the inlet and the outlet;
a bleed conduit (30) stemming from the duct (22), the bleed conduit (30) having a bleed inlet (31) connected to the bleed port (24) and a bleed outlet (32) fluidly connectable to a fluid system (S);
a first valve (33) connected to the bleed conduit (30) between the bleed inlet (31) and the bleed outlet (32), the first valve (33) having an open configuration and a closed configuration; **characterized in that** it further comprises
a second valve (34) connected to the bleed conduit (30) upstream of the first valve (33) and at or proximate the bleed port (24), the second valve (34) having a second open configuration and a second closed configuration, and **in that**:
when in the second closed configuration, the second valve (34) blocks fluid communication between the bleed port (24) and the first valve (33) such that a portion of the bleed conduit (30) between the first valve (33) and the second valve (34) is fluidly isolated from the duct (22); and
the second valve (34) being in the second open configuration when the first valve (33) is in the open configuration to fluidly connect the bleed port (24) to the bleed outlet (32) through the first valve (33) and through the second valve (34).

2. The aircraft engine (10) of claim 1, wherein the duct (22) includes an annular gaspath (F2) defined radially between the inner casing (20) and the outer casing (21) of the aircraft engine (10).

3. The aircraft engine (10) of claim 1 or 2, wherein the second valve (34) is a non-actuated valve, the non-actuated valve configured to move from the second closed configuration to the second open configuration in response to a pressure differential across the non-actuated valve (34) being greater than a pressure threshold.

4. The aircraft engine (10) of any preceding claim, wherein the second valve (34) is located at the bleed port (24).

5. The aircraft engine (10) of any preceding claim, wherein the second valve (34) includes at least one gate (34a) movable from a closed position in which the at least one gate (34a) blocks fluid communication between the duct (22) and the bleed conduit (30) through the second valve (34) and an open position in which the at least one gate (34a) allows fluid communication through the second valve (34).

6. The aircraft engine (10) of claim 5, wherein the at least one gate (34a) includes a plurality of gates (34a) circumferentially distributed about a valve axis (V).

7. The aircraft engine (10) of claim 6, wherein each of the plurality of gates (34a) partially overlaps a circumferentially adjacent one of the plurality of gates (34a).

8. The aircraft engine (10) of claim 6 or 7, wherein each of the plurality of gates (34a) is pivotable from the closed position to the open position about a respective one of pivot axes (P) being normal to the valve axis (V).

9. The aircraft engine (10) of claim 8, wherein each of the plurality of gates (34a) has an edge (34b) pivotably connected to either a peripheral wall of the bleed conduit (30) or a peripheral wall circumscribing the bleed port (24).

10. The aircraft engine (10) of any of claims 6 to 9, wherein the plurality of gates (34a) are triangular, and each of the plurality of gates (34a) has side edges (34c) sealingly engaged to side edges (34c) of adjacent gates (34a) of the plurality of gates (34a).

11. The aircraft engine (10) of any of claims 5 to 10, wherein the at least one gate (34a) extends into the bleed conduit (30) when the at least one gate (34a) is in the open position.

12. The aircraft engine (10) of any of claims 5 to 11, wherein the at least one gate (34a) is biased in the closed position

13. The aircraft engine (10) of claim 12, further comprising at least one biasing member (34d) operatively connected to the at least one gate (34a), the at least one biasing member (34d) exerting a force on the at least one gate (34a) to push the at least one gate (34a) in the closed position.

14. The aircraft engine (10) of any of claims 5 to 13, wherein the at least one gate (34a) is free from engagement with an actuator.

## Patentansprüche

1. Luftfahrzeugtriebwerk (10), umfassend:
ein Innengehäuse (20), das sich in Umfangsrichtung um einen Verdichterabschnitt (14), eine Brennkammer (16) und einen Turbinenabschnitt (18) erstreckt;
ein Außengehäuse (21), das sich ringförmig um das Innengehäuse (20) erstreckt;
einen Kanal (22), der radial relativ zu einer Mittelachse (11) zwischen dem Innengehäuse (20) und dem Außengehäuse (21) definiert ist, wobei der Kanal (22) einen Einlass und einen Auslass aufweist, wobei der Kanal (22) eine Entlüftungsöffnung (24) durch das Außengehäuse (21) zwischen dem Einlass und dem Auslass definiert;
eine Entlüftungsleitung (30), die von dem Kanal (22) ausgeht, wobei die Entlüftungsleitung (30) einen mit der Entlüftungsöffnung (24) verbundenen Entlüftungseinlass (31) und einen mit einem Fluidsystem (S) fluidverbindbaren Entlüftungsauslass (32) aufweist;
ein erstes Ventil (33), das mit der Entlüftungsleitung (30) zwischen dem Entlüftungseinlass (31) und dem Entlüftungsauslass (32) verbunden ist, wobei das erste Ventil (33) eine offene und eine geschlossene Konfiguration aufweist; **dadurch gekennzeichnet, dass** es ferner Folgendes umfasst:
ein zweites Ventil (34), das mit der Entlüftungsleitung (30) stromaufwärts von dem ersten Ventil (33) und an oder in der Nähe der Entlüftungsöffnung (24) verbunden ist, wobei das zweite Ventil (34) eine zweite offene Konfiguration und eine zweite geschlossene Konfiguration aufweist, und dadurch, dass:
wenn es sich in der zweiten geschlossenen Konfiguration befindet, das zweite Ventil (34) die Fluidverbindung zwischen der Entlüftungsöffnung (24) und dem ersten Ventil (33) derart blockiert, dass ein Abschnitt der Entlüftungsleitung (30) zwischen dem ersten Ventil (33) und dem zweiten Ventil (34) fluidisch von dem Kanal (22) isoliert ist; und
wobei sich das zweite Ventil (34) in der zweiten offenen Konfiguration befindet, wenn sich das erste Ventil (33) in der offenen Konfiguration befindet, um die Entlüftungsöffnung (24) durch das erste Ventil (33) und durch das zweite Ventil (34) fluidisch mit dem Entlüftungsauslass (32) zu verbinden.

2. Luftfahrzeugtriebwerk (10) nach Anspruch 1, wobei der Kanal (22) einen ringförmigen Gasweg (F2) beinhaltet, der radial zwischen dem Innengehäuse (20) und dem Außengehäuse (21) des Luftfahrzeugtriebwerks (10) definiert ist.

3. Luftfahrzeugtriebwerk (10) nach Anspruch 1 oder 2, wobei das zweite Ventil (34) ein nicht betätigtes Ventil ist, das nicht betätigte Ventil dazu konfiguriert ist, sich als Reaktion auf einen Druckunterschied über das nicht betätigte Ventil (34), der größer als ein Druckschwellenwert ist, von der zweiten geschlossenen Konfiguration in die zweite offene Konfiguration zu bewegen.

4. Luftfahrzeugtriebwerk (10) nach einem der vorhergehenden Ansprüche, wobei sich das zweite Ventil (34) an der Entlüftungsöffnung (24) befindet.

5. Luftfahrzeugtriebwerk (10) nach einem der vorhergehenden Ansprüche, wobei das zweite Ventil (34) mindestens eine Klappe (34a) beinhaltet, die aus einer geschlossenen Position, in welcher die mindestens eine Klappe (34a) die Fluidverbindung zwischen dem Kanal (22) und der Entlüftungsleitung (30) durch das zweite Ventil (34) blockiert, und einer offenen Position bewegbar ist, in welcher die mindestens eine Klappe (34a) die Fluidverbindung durch das zweite Ventil (34) zulässt.

6. Luftfahrzeugtriebwerk (10) nach Anspruch 5, wobei die mindestens eine Klappe (34a) eine Vielzahl von Klappen (34a) umfasst, die in Umfangsrichtung um eine Ventilachse (V) verteilt sind.

7. Luftfahrzeugtriebwerk (10) nach Anspruch 6, wobei jedes der Vielzahl von Klappen (34a) ein in Umfangsrichtung benachbartes der Vielzahl von Klappen (34a) teilweise überlappt.

8. Luftfahrzeugtriebwerk (10) nach Anspruch 6 oder 7, wobei jedes der Vielzahl von Klappen (34a) um eine jeweilige der Schwenkachsen (P), die normal zu der Ventilachse (V) verlaufen, aus der geschlossenen Position in die offene Position schwenkbar ist.

9. Luftfahrzeugtriebwerk (10) nach Anspruch 8, wobei jedes der Vielzahl von Klappen (34a) eine Kante (34b) aufweist, die entweder mit einer Umfangswand der Entlüftungsleitung (30) oder einer Umfangswand, welche die Entlüftungsöffnung (24) umgibt, schwenkbar verbunden ist.

10. Luftfahrzeugtriebwerk (10) nach einem der Ansprüche 6 bis 9, wobei die Vielzahl von Klappen (34a) dreieckig ist und jede der Vielzahl von Klappen (34a) Seitenkanten (34c) aufweist, die dichtend mit Seitenkanten (34c) benachbarter Klappen (34a) der Vielzahl von Klappen (34a) in Eingriff stehen.

11. Luftfahrzeugtriebwerk (10) nach einem der Ansprüche 5 bis 10, wobei sich die mindestens eine Klappe (34a) in die Entlüftungsleitung (30) erstreckt, wenn sich die mindestens eine Klappe (34a) in der offenen Position befindet.

12. Luftfahrzeugtriebwerk (10) nach einem der Ansprüche 5 bis 11, wobei die mindestens eine Klappe (34a) in die geschlossene Position vorgespannt ist

13. Luftfahrzeugtriebwerk (10) nach Anspruch 12, ferner umfassend mindestens ein Vorspannelement (34d), das mit der mindestens einen Klappe (34a) wirkverbunden ist, wobei das mindestens eine Vorspannelement (34d) eine Kraft auf die mindestens eine Klappe (34a) ausübt, um die mindestens eine Klappe (34a) in die geschlossene Position zu drücken.

14. Luftfahrzeugtriebwerk (10) nach einem der Ansprüche 5 bis 13, wobei die mindestens eine Klappe (34a) frei von einem Eingriff mit einem Aktuator ist.

## Revendications

1. Moteur d'aéronef (10), comprenant :
un carter interne (20) se prolongeant de manière circonférentielle autour d'une section de compresseur (14), d'une chambre de combustion (16) et d'une section de turbine (18) ;
un carter externe (21) se prolongeant de manière annulaire autour du carter interne (20) ;
un conduit (22) défini radialement par rapport à un axe central (11) entre le carter interne (20) et le carter externe (21), le conduit (22) ayant une entrée et une sortie, le conduit (22) définissant un orifice de purge (24) à travers le carter externe (21) entre l'entrée et la sortie ;
un conduit de purge (30) provenant du conduit (22), le conduit de purge (30) comportant une entrée de purge (31) reliée à l'orifice de purge (24) et une sortie de purge (32) pouvant être reliée de manière fluidique à un système de fluide (S) ;
une première vanne (33) reliée au conduit de purge (30) entre l'entrée de purge (31) et la sortie de purge (32), la première vanne (33) ayant une configuration ouverte et une configuration fermée ; **caractérisée en ce qu'**elle comprend également
une seconde vanne (34) reliée au conduit de purge (30) en amont de la première vanne (33) et au niveau ou à proximité de l'orifice de purge (24), la seconde vanne (34) ayant une seconde configuration ouverte et une seconde configuration fermée, et **en ce que** :
dans la deuxième configuration fermée, la deuxième vanne (34) bloque la communication fluidique entre l'orifice de purge (24) et la première vanne (33) de telle sorte qu'une partie du conduit de purge (30) entre la première vanne (33) et la deuxième vanne (34) est isolée de manière fluidique du conduit (22) ; et
la deuxième vanne (34) étant dans la deuxième configuration ouverte lorsque la première vanne (33) est dans la configuration ouverte pour relier de manière fluidique l'orifice de purge (24) à la sortie de purge (32) à travers la première vanne (33) et à travers la deuxième vanne (34).

2. Moteur d'aéronef (10) selon la revendication 1, dans lequel le conduit (22) comprend un trajet de gaz annulaire (F2) défini radialement entre le carter interne (20) et le carter externe (21) du moteur d'aéronef (10).

3. Moteur d'aéronef (10) selon la revendication 1 ou 2, dans lequel la deuxième vanne (34) est une vanne non actionnée, la vanne non actionnée étant configurée pour passer de la seconde configuration fermée à la seconde configuration ouverte en réponse à un différentiel de pression à travers la vanne non actionnée (34) étant supérieur à un seuil de pression.

4. Moteur d'aéronef (10) selon l'une quelconque des revendications précédentes, dans lequel la deuxième vanne (34) est située au niveau de l'orifice de purge (24).

5. Moteur d'aéronef (10) selon l'une quelconque des revendications précédentes, dans lequel la deuxième vanne (34) comprend au moins une porte (34a) mobile d'une position fermée dans laquelle l'au moins une porte (34a) bloque la communication de fluide entre le conduit (22) et le conduit de purge (30) à travers la deuxième vanne (34) et une position ouverte dans laquelle l'au moins une porte (34a) permette une communication de fluide à travers la deuxième vanne (34).

6. Moteur d'aéronef (10) selon la revendication 5, dans lequel l'au moins une porte (34a) comprend une pluralité de portes (34a) réparties de manière circonférentielle autour d'un axe de vanne (V).

7. Moteur d'aéronef (10) selon la revendication 6, dans lequel chacune de la pluralité de portes (34a) chevauche partiellement une porte de manière circonférentielle adjacente de la pluralité de portes (34a).

8. Moteur d'aéronef (10) selon la revendication 6 ou 7, dans lequel chacune de la pluralité de portes (34a) peut pivoter de la position fermée à la position ouverte autour d'un axe de pivot respectif (P) normal à l'axe de vanne (V).

9. Moteur d'aéronef (10) selon la revendication 8, dans lequel chacune de la pluralité de portes (34a) comporte un bord (34b) relié de manière pivotante soit à une paroi périphérique du conduit de purge (30), soit à une paroi périphérique entourant l'orifice de purge (24).

10. Moteur d'aéronef (10) selon l'une quelconque des revendications 6 à 9, dans lequel la pluralité de portes (34a) sont triangulaires, et chacune de la pluralité de portes (34a) a des bords latéraux (34c) en prise de manière étanche avec les bords latéraux (34c) des portes adjacentes (34a) de la pluralité de portes (34a).

11. Moteur d'aéronef (10) selon l'une quelconque des revendications 5 à 10, dans lequel l'au moins une porte (34a) se prolonge dans le conduit de purge (30) lorsque l'au moins une porte (34a) est en position ouverte.

12. Moteur d'aéronef (10) selon l'une quelconque des revendications 5 à 11, dans lequel l'au moins une porte (34a) est sollicitée dans la position fermée.

13. Moteur d'aéronef (10) selon la revendication 12, comprenant également au moins un élément de sollicitation (34d) relié de manière fonctionnelle à l'au moins une porte (34a), l'au moins un élément de sollicitation (34d) exerçant une force sur l'au moins une porte (34a) pour pousser l'au moins une porte (34a) dans la position fermée.

14. Moteur d'aéronef (10) selon l'une quelconque des revendications 5 à 13, dans lequel l'au moins une porte (34a) est libre de tout engagement avec un actionneur.
